(19) Europäisches Patentamt

European Patent Office

Office européen des brevets

(11) **EP 1 163 124 B1**

(12) **EUROPEAN PATENT SPECIFICATION**

(45) Date of publication and mention
of the grant of the patent:
**30.11.2005 Bulletin 2005/48**

(21) Application number: **00911544.5**

(22) Date of filing: **25.02.2000**

(51) Int Cl.$^7$: **B60N 2/427**

(86) International application number:
**PCT/SE2000/000381**

(87) International publication number:
**WO 2000/050256 (31.08.2000 Gazette 2000/35)**

(54) **A DEVICE FOR COUNTERACTING THE OCCURRENCE OF WHIPLASH INJURIES**

VORRICHTUNG ZUR VERHINDERUNG DES PEITSCHENTRIEBEFFEKTES

DISPOSITIF POUR EMPECHER LES BLESSURES CONSECUTIVES AU COUP DU LAPIN

(84) Designated Contracting States:
**DE FR GB**

(30) Priority: **25.02.1999 SE 9900683**

(43) Date of publication of application:
**19.12.2001 Bulletin 2001/51**

(73) Proprietor: **AUTOLIV DEVELOPMENT AB**
**447 83 Vargarda (SE)**

(72) Inventor: **Nilsson, Kenth Ingvar**
**(SE)**

(74) Representative: **Hammond, Andrew David et al**
**Valea AB**
**Lindholmspiren 5**
**417 56 Gothenburg (SE)**

(56) References cited:
**WO-A1-96/16834          US-A- 3 552 795**
**US-A- 3 561 806          US-A- 3 802 737**

## Description

The present invention relates to a device for counteracting the occurrence of whiplash injuries at a rapid motion change by a vehicle, e.g., a collision from the rear, the device including means, which allows a controlled change of position of the seat and the person sitting thereon backwards in relation to the direction of movement along the control element at the motion change, whereby the seat is arranged to remain in a rear position after the motion change.

## The background of the invention and the problem

A whiplash injury is a soft tissue injury which can occur on account of violent acceleration and/or deceleration applied to the cervical spine. This kind of injuries occur i. a. when sitting in a car which is subjected to a rear-end impact.

Whiplash injury at rear-end impact in a car is a large and a well known problem in today's cars. This kind of injury has increased while other injuries have decreased. There are a number of theories about how whiplash injuries occur at rear-end impacts. Some of them are shortly described below.

1. The cervical spine is subjected to a special movement in the early phase of the collision due to the neck being pressed forwards at the same time as the head and the back part move into the back rest of the seat. This happens because the back rest is considerably more stiff at the top portion due to the beam connecting the right and left side of the back rest.

2. The cervical spine assumes a S-shaped curve, which is an abnormal movement, during the early phase of the collision when the head moves backwards in relation to the shoulder part before the head starts to pivot.

3. There is a pressure increase in the spinal channel due to the decrease of the volume of the spinal channel in a very short period of time when the head is tilted backwards.

4. The cervical spine is subjected to shear stresses as the entire head wants to move backwards in relation to the shoulder part.

5. A rebound occurs in the late phase of the collision and the body is thrown into a stiff car belt due to the elastic energy of the back rest of the chair. The neck then makes a movement which passes its normal end position.

6. Since the acceleration of the chair at a rear-end impact is reciprocally proportional to the weight of the person, this means that the chair moves different distances backwards, when persons having different weights is subjected to the acceleration. The risk is then that a heavy person moves to the end position of the sliding track, which gives a major impact with successive rebound, which may be worse than a corresponding impact at a fixedly mounted chair. However, a light person e.g., a child can not achieve a force sufficient for the chair /back rest to begin to move backwards in the car.

Independently of the reason for the occurrence of whiplash injuries, a common factor for all the above theories is a too high acceleration affecting the body in one way or another in such a manner that the injury occurs. Geiger, et al., showed in human trials 1995, that no whiplash injuries arise if the acceleration was reduced to below 4 g - 5 g (Geiger, B. C., Steffen, H., "Comparison of head neck kinematics during rear end impact between standard hybrid III, RID neck, volunteers and PMTO's", IRCOBI, 1995).

The invention is based on a device according to the preamble of claim 1 described in WO98/40238 and including means, which at a motion change allows a controlled change of position of the entire seat backwards in relation to the travel direction. The seat is provided with control elements arranged to provide the seat and the person thereon, an essentially simultaneous movement against the travel direction and /or an essentially pivoting movement. Further, the seat is arranged to remain in a rearward position after the motion change.

## The object of the invention and the solution of the problem

The basis for the present invention is a study based on crash tests with different kinds of dummies (Hybrid III and BIORID) and a mathematic model for simulation of the dynamics around whiplash injuries. After having achieved a good correlation between the mathematic model and the crash tests with the dummies, it can be noted that all values being considered having importance for the risk of acquiring a whiplash injury, have been reduced with 20 % till 70 % using the present invention.

The purpose of the present invention is to reduce the acceleration of the person directly after the incidence of the collision, so that it not exceeds 4 g or 5 g, whereby whiplash injuries can be avoided or at least be significantly alleviated. This object has been solved by means of the features defined in the independent claims 1 and 4.

### Description of the drawings

The invention will be further described below in a number of embodiments with reference to the drawings.

Fig. 1 shows a cross section through a first embodiment of control and braking means forming part of the invention.

Figs. 2, 3 and 5 show schematically three different embodiments of braking means providing a braking force utilizing plastification.

Fig. 4 shows schematically a side view of a further embodiment of a braking means providing a braking force by means of friction and a resilient force.

Fig.6 shows a side view of a person sitting on a seat and the forces influencing the same.

### Description of the embodiments

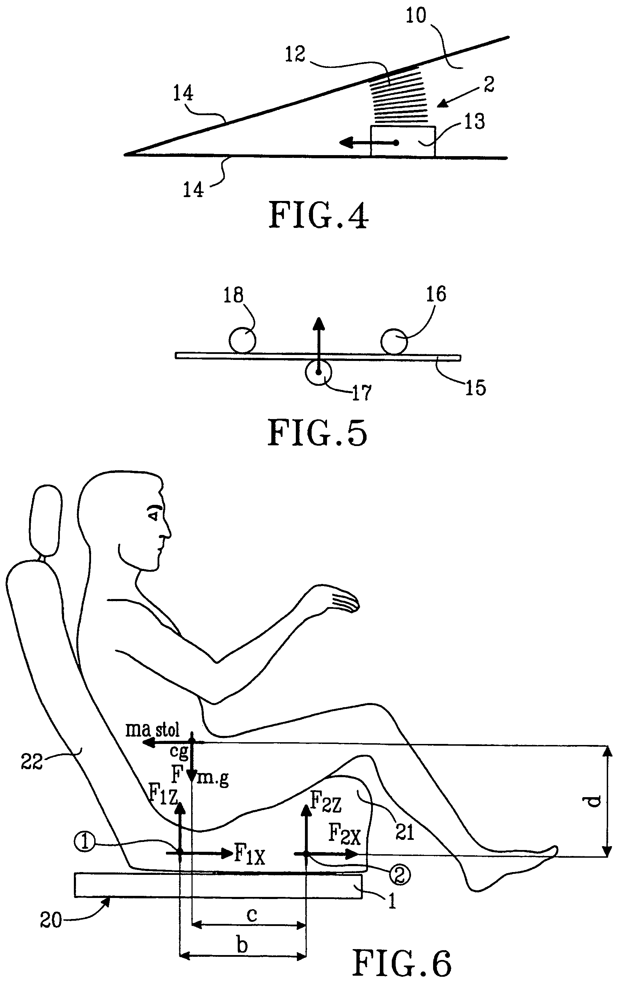

The device to counteract the occurrence of whiplash injuries according to the invention includes specific means, which at the motion change of the vehicle allows a controlled change of position of the entire seat 20 backwards in relation to the direction of movement. The term seat means at least one sitting part 21, a back rest 22 and a neck rest 23, see fig. 6. The seat is provided with control elements 1, which are arranged to give the seat and the person thereon an essentially simultaneous, linear movement against the direction of travel and/or an essentially pivoting motion.

Said means comprises braking means 2 to brake the seat and the person sitting thereon. The braking force of the braking means is related to the weight of the person in such a way that the braking force is higher for a person having a higher weight than for a person having a lower weight. Further, the braking force is arranged to increase during the movement backwards relative to the floor of the vehicle. The braking of the seat is as said, taken care of by the braking means 2 which is so designed that the velocity of the motion for the seat and the person relative to the floor of the vehicle decreases until the movement has stopped and this before the seat and the person reach the maximum rearward position of the braking means. It should be noted that this naturally only applies when the rear end impact is of the size and the extent that a risk for a whiplash injury is present.

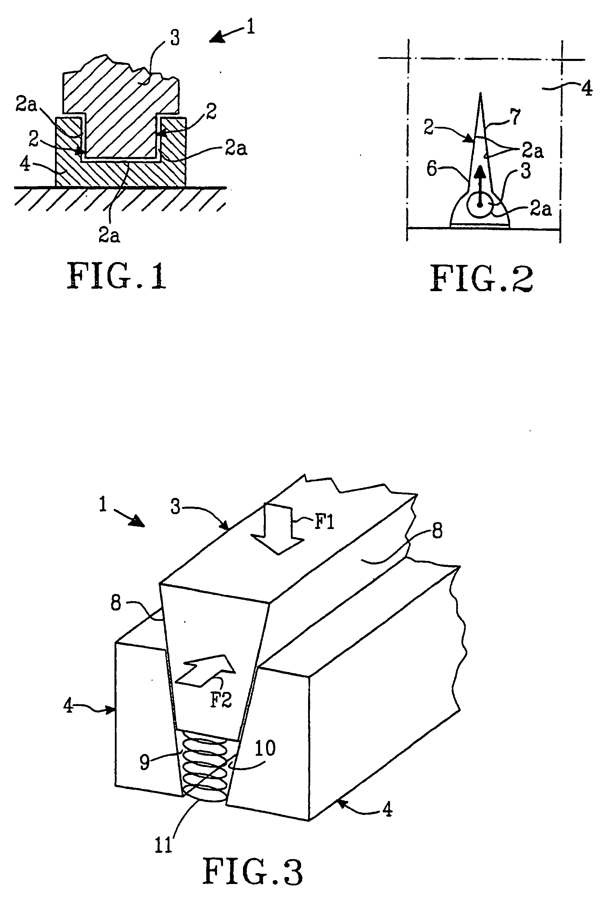

A first embodiment is shown in Fig. 1, in which 1 designates a control element provided with a braking means 2 in the form of three friction surfaces 2a between a seat part 3 and a chassis part 4. Suitably two control elements 1 are arranged between the seat and the chassis next to each other in the direction of movement at an impact.

The chassis part 4 may be constituted by a sliding track and the seat part 3 of a slide adapted to cooperate with each other. The sliding track 4 may be shaped as an U-girder, in which the slide 3 is displaceable. The slide 3 and the sliding track 4 are arranged in friction contact with each other, so that the seat is braked during its movement backwards at a relative motion change. The friction coefficient for the contact surface 2 may be essentially constant along the control element 1, but may also be arranged to increase in the direction of movement of the seat.

Using fundamental physical principles the friction coefficient can be calculated using a simple model as follows. Assuming that the seat exhibits two support points against the base, whereof one for reasons of simplicity is assumed to be zero, the seat and the person thereon apply a gravitation force $F_{mg}$ directed downwards. This gravitation force is compensated by two normal forces $F_{1,z}$ and $F_{2,z}$ directed upwards. In figure 6 the force situation is shown and by applying fundamental mechanical principles in a coordinate system in a suitable way, the following equations are obtained, where:

Fx = the force in x-direction
Fz = the force in z-direction
m = the total mass of the chair and the person
$a_{stol}$ = the acceleration of the chair
g = gravitation
$\mu$ = the ratio between Fx and Fz (friction coefficient)
d = the distance in z-direction between Cg (the common centre of gravity) and the sliding track
b = the distance in x-direction between the front and rear sliding point
c = the distance in x-direction between the front sliding point and Cg

$$\text{Motion equation:} \qquad \sum F_x = m \times a; \qquad F_{1x} + F_{2x} = m \times a_{stol} \qquad (1)$$

$$\text{Equilibrium equation:} \qquad \sum F_z = 0; \qquad F_{1z} + F_{2z} - m \times g = 0 \qquad (2)$$

$$\text{Constitutive correlation (Coulumbs law):} \qquad F_{1x} = \mu \times F_{1z} \qquad (3)$$

By utilizing the d'Alemberst force (mxa) in the moment equation around point 2 is obtained:

$$m \times a_{stol} \times d + m \times g \times c - F_{1z} \times b = 0 \qquad (4)$$

To simplify the calculations in this example, put:

$$F_{2x} = 0$$

$$(1) + (2) \Rightarrow m \times a_{stol} = \mu \times F_{1z} ; \qquad (4) \Rightarrow F_{1z} = m \times a_{stol} \times d + m \times g \times c / b$$

From this follows:

$$m \times a_{stol} \times b = m \times \mu \times a_{stol} \times d + m \times \mu \times g \times c \quad \Rightarrow \quad \boxed{a_{stol} = \mu \times g \times c / (b-\mu)d}$$

From the above it is evident that $a_{stol}$ is independent of the weight of the person.

According to a second embodiment, shown in figure 2, the braking means may comprise a plasticizing means including at least one projecting seat part 5 and at least one chassis part including a rectangular opening or a groove 6. The groove is at least to a part 7 of its extension narrower than the first part. The seat part 3 is arranged for a relative motion change along the groove 6 under simultaneous plastification of one or both parts 3 and 6. The term plastification means a change of shape which does not reassume its earlier shape. One example of plastification is when one or both contact surfaces 2 are designed with a friction material, which may be serrations, toothing or the like or with a friction coating, e.g. of the type sand paper. The friction material or coating may be thinner in the beginning of the sliding track and increase towards the end of the track as to obtain an increased retarding effect

In figure 3 an alternative embodiment of the plastification is shown. Here the cross section of the seat part 3 is wedge-shaped, the converging surfaces 8 of which cooperates with the side surfaces 9 of a groove 10 in the chassis part 4. The groove 9 is designed with a complementary form to the form of the wedge. The wedge-shaped seat part 3 is relieved by springs 11, so that the wedge 3 in the relieved state of the seat 20 is somewhat elevated relative to the bottom of the groove 10. Depending on the weight of the person a major or a minor part of the friction surfaces 8 and 9 to participate in the plastification. The arrow F1 indicates the weight of the person and arrow F2 the collision force moving the chair in opposite direction.

According to a fourth embodiment shown in figure 4, the braking means 2 comprise at least one resilient element 12, which is connected to a friction block 13, and which braking means is displaceable within two inclined friction surfaces 14. The spring 12 is arranged transversely against the direction of movement of the seat, in order to prevent the rebound of the seat from a rear end position and thereby to avoid the risk of injury associated with the rebound. The braking force is achieved by that the movement of the braking means 12, 13 continues in the wedge shaped groove 10, in the direction of which the groove taper. This leads to an increase of the braking force.

It should be noted that the resilient element 12 also may comprise a part of the wedge shaped groove 14, i. e., that one or both side of the friction surfaces 14 of the wedge shaped groove 10 flexes back and thereby aids to retard the seat.

An other alternative of utilizing plastification is shown in figure 5. The plastification means consists of a rectangular element, e.g., a rod, a plate 15 or the like, arranged between two loading points 16, 17, 18 situated in a triangular relation on both sides of the element 15. The point 17 may for example represent the seat part 3 and the points 16 and 18 the chassis part 4. The element 15 is suitably of a plastic material, which does not reassume its earlier shape after the deformation.

For all the above described embodiments applies, that the seat or its back rest/ neck rest is brought to assume a forward leaning position, before the seat is set in a backwards motion, to place the neck rest in a forward position. This localisation in advantageous in view of injury, since the neck rest is displaced in the direction towards the rear part of the head of the person in the incidence of collision and catches its backwards impact. The forward leaning position is achieved by means of a release mechanism, mechanically activating a spring, or pyrotechnically a powder charge or other suitable power, during a certain period of time, e.g., 10 - 50 ms. Thereafter the seat may be given a backwards tilted position, which eventually increases during the continued movement of the seat.

In order to reduce the acceleration at a rear end impact, it may be suitable to arrange an acceleration measuring device, which applies the brakes of the vehicle when the acceleration exceeds a certain value and the velocity of the vehicle is below an other value. The collision velocity may then be reduced by between 0.5 and 1 g.

It should be noted that it is possible to and may be advantageous to combine one or more of the described embodiments of braking means. Therefore it may be used a resilient, a secondary as well as a plastic change of shape one by one or in combination.

The invention is not limited to the described embodiments but it would be obvious for the person skilled in the art, that several modifications and variants may be performed within the scope of the enclosed claims.

**Claims**

1. Device for preventing the occurrence of whiplash injuries to a person sitting in a seat (20) during a rapid motion change of a vehicle, at a collision from the rear, the device including at least one brake (2) for retarding the seat along a control element (1), which allows a controlled change of displacement of the seat backward in relation to the direction of movement during the motion change, whereby the seat is arranged to remain in a rearward position after the motion change,
   **characterised in**,

   that      the brake (2) comprises a seat part (3), which is affected by the weight of the person, and provided to exert a braking force in relation to it against a contact surface (2a) arranged at the chassis of the vehicle,

   that      the brake is provided with friction means arranged to give a low braking force during the initial motion of the seat backwards, and to apply an increased braking force against the contact surface during the continued motion of the seat so that the motion velocity of the seat successively decreases in relation to the vehicle, until the motion has substantially stopped.

2. Device according to claim 1,
   **characterised in**,

   that      the friction coefficient of the contact surface (2a) is arranged to increase in the direction of movement of the seat.

3. 3. Device according to claim 1,
   **characterised in**,

   that      said braking force is obtained **in that** the seat part (3) of the brake (2) includes a braking block (13) acted upon by a resilient element (12),

   that      the braking block (13) is arranged and displaceable in the space between two inclined surfaces (14) of the chassis part (4), and

   that      the flexing motion of the resilient element (12) is arranged transversely to the motion direction of the seat.

4. Device for preventing the occurrence of whiplash injuries to a person sitting in a seat (20) during a rapid motion change of a vehicle, at a collision from the rear, the device including at least one brake (2) for retarding the seat along a control element (1), which allows a controlled change of displacement of the seat backward in relation to the direction of movement during the motion change, whereby the seat is arranged to remain in a rearward position after the motion change,
   **characterised in**,

   that      the brake (2) comprises a seat part (3), which is affected by the weight of the person, and provided to exert a braking force in relation to it against a contact surface (2a) arranged at the chassis of the vehicle,

   that      the brake is provided with plasticizing means arranged to give a low braking force, during the initial motion of the seat backwards, and to apply an increased braking force against the contact surface during the continued motion of the seat so that the motion velocity of the seat successively decreases in relation to the vehicle, until the motion has substantially stopped.

**5.** Device according to claim 4,
**characterised in**,

    **that** the chassis part (4) include at least one rectangular opening, groove (6) or the like, in which a seat part (3) is insertable,

    **that** the groove (6) and the seat part (3) cooperating with this are provided or designed with friction surfaces, and

    **that** the opening, the groove (6) or the like, is narrowing along at least a part of its extension in the direction towards one end of its rear diverging ends so that an increasing braking effect is achieved between the parts (3, 4) during a relative motion change.

**6.** Device according to claim 4,
**characterised in**

    **that** the seat part (3) has a wedge-shaped cross section, the converging surfaces (8) of which are arranged to cooperate with the side surfaces (9) in a groove (10) or the like in a chassis part (4),

    that the groove (10) or the like is designed with a shape essentially complementary to the shape of the wedge, and

    **that** the wedge-shaped seat part (3) is vertically displaceable in the groove against the action of at least one spring (11).

**7.** Device according to claim 4,
**characterised in**,

    **that** the contact surfaces (2a) of the brake (2) include or comprise plasticizing means, which are designed to provide a permanent deformation.

**8.** Device according to claim 4,
**characterised in**

    **that** the plasticizing means comprises plasticly deformable material and is designed so that the amount of said material increases in the direction of motion of the seat, so as to obtain an increased breaking force during the continued motion of the seat.

**9.** Device according to claim 7,
**characterised in**,

    **that** the plasticizing means comprise a rectangular element (15), e.g. a rod, plate or the like, which is arranged between the seat part (3) and the chassis part (4),

    **that** the rectangular element (15) is intended to receive bending forces at motion of the seat part (3) relative to the chassis part (4), and

    **that** the element (15) is of a plasticly deformable material, which does not resume its earlier shape after the deformation.

**Patentansprüche**

**1.** Vorrichtung zum Verhindern des Auftretens von Schleudertraumata bei einer Person, die während einer schnellen Bewegungsänderung eines Fahrzeuges bei einem heckseitigen Zusammenstoß auf einem Sitz (20) sitzt, wobei die Vorrichtung mindestens eine Bremse (2) zur Verzögerung des Sitzes längs eines Kontrollelementes (1) einschließt, das eine kontrollierte Änderung der Sitzverschiebung nach hinten in Bezug auf die Bewegungsrichtung während der Bewegungsänderung erlaubt, wobei der Sitz so angeordnet ist, dass er nach der Bewegungsänderung in einer rückwärts gerichteten Position verbleibt,
**dadurch gekennzeichnet,**

    **dass** die Bremse (2) ein Sitzteil (3) aufweist, auf das sich das Gewicht der Person auswirkt und das so ausgestattet ist, dass es eine Bremskraft in Bezug auf das Gewicht der Person gegen eine Berührungsfläche (2a) ausübt, welche am Fahrgestell des Fahrzeuges angeordnet ist,

    **dass** die Bremse mit Reibungselementen ausgestattet ist, die so angeordnet sind, dass sie während der Anfangsbewegung des Sitzes nach hinten eine geringe Bremskraft bewirken und während der fortgesetzten Bewegung des Sitzes eine zunehmende Bremskraft gegen die Berührungsfläche ausüben, so dass die Bewegungsgeschwindigkeit des Sitzes in Bezug auf das Fahrzeug allmählich abnimmt, bis die Bewegung im Wesentlichen zum Stillstand gekommen ist.

**2.** Vorrichtung nach Anspruch 1,
   **dadurch gekennzeichnet,**

   **dass** der Reibungskoeffizient der Berührungsfläche (2a) so gestaltet ist, dass er in der Bewegungsrichtung des Sitzes zunimmt.

**3.** Vorrichtung nach Anspruch 1,
   **dadurch gekennzeichnet,**

   **dass** die Bremskraft **dadurch** erhalten wird, dass das Sitzteil (3) der Bremse (2) einen Bremsblock (13) einschließt, auf den ein federndes Element (12) einwirkt,
   **dass** der Bremsblock (13) in dem Zwischenraum zwischen zwei geneigten Flächen (14) des Fahrgestellteils (4) angeordnet und verschiebbar ist, und
   **dass** die Biegebewegung des federnden Elements (12) quer zur Bewegungsrichtung des Sitzes angeordnet ist.

**4.** Vorrichtung zum Verhindern des Auftretens von Schleudertraumata bei einer Person, die während einer schnellen Bewegungsänderung eines Fahrzeuges bei einem heckseitigen Zusammenstoß auf einem Sitz (20) sitzt, wobei die Vorrichtung mindestens eine Bremse (2) zur Verzögerung des Sitzes längs eines Kontrollelementes (1) einschließt, das eine kontrollierte Änderung der Sitzverschiebung nach hinten In Bezug auf die Bewegungsrichtung während der Bewegungsänderung erlaubt, wobei der Sitz so angeordnet ist, dass er nach der Bewegungsänderung in einer rückwärts gerichteten Position verbleibt,
   **dadurch gekennzeichnet,**

   **dass** die Bremse (2) ein Sitzteil (3) aufweist, auf das sich das Gewicht der Person auswirkt und das so ausgestattet ist, dass es eine Bremskraft in Bezug auf das Gewicht der Person gegen eine Berührungsfläche (2a) ausübt, welche am Fahrgestell des Fahrzeuges angeordnet ist,
   **dass** die Bremse mit plastifizierenden Elementen ausgestattet ist, die so angeordnet sind, dass sie während der Anfangsbewegung des Sitzes nach hinten eine geringe Bremskraft bewirken und während der fortgesetzten Bewegung des Sitzes eine zunehmende Bremskraft gegen die Berührungsfläche ausüben, so dass die Bewegungsgeschwindigkeit des Sitzes in Bezug auf das Fahrzeug allmählich abnimmt, bis die Bewegung im Wesentlichen zum Stillstand gekommen ist.

**5.** Vorrichtung nach Anspruch 4,
   **dadurch gekennzeichnet,**

   **dass** das Fahrgestellteil (4) mindestens eine rechteckige Öffnung, Rille (6) oder dergleichen einschließt, in welche ein Sitzteil (3) einsetzbar ist,
   **dass** die Rille (6) und das Sitzteil (3), das mit dieser zusammenwirkt, mit Reibungsflächen ausgestattet oder konstruiert sind, und
   **dass** sich die Öffnung, Rille (6) oder dergleichen entlang wenigstens eines Teils ihrer Ausdehnung in Richtung eines Endes ihrer nach hinten divergierenden Enden verjüngt, so dass während einer relativen Bewegungsänderung eine zunehmende Bremswirkung zwischen den Teilen (3, 4) erreicht wird.

**6.** Vorrichtung nach Anspruch 4,
   **dadurch gekennzeichnet,**

   **dass** das Sitzteil (3) einen keilförmigen Querschnitt aufweist, dessen konvergierende Flächen (8) so angeordnet sind, dass sie mit den Seitenflächen (9) in einer Rille (10) oder dergleichen in einem Fahrgestellteil (4) zusammenwirken,
   **dass** die Rille (10) oder dergleichen mit einer Form konstruiert ist, die im Wesentlichen das Gegenstück zur Form des Keiles bildet, und
   **dass** das keilförmige Sitzteil (3) in vertikaler Richtung gegen die Wirkung von mindestens einer Feder (11) in der Rille verschiebbar ist.

**7.** Vorrichtung nach Anspruch 4,
**dadurch gekennzeichnet,**

**dass** die Berührungsflächen (2a) der Bremse (2) plastifizierende Elemente einschließen oder aufweisen, welche so konstruiert sind, dass sie zu einer bleibenden Verformung führen.

**8.** Vorrichtung nach Anspruch 4,
**dadurch gekennzeichnet,**

**dass** die plastifizierenden Elemente plastisch verformbares Material aufweisen und so konstruiert sind, dass die Menge des Materials in der Bewegungsrichtung des Sitzes zunimmt, um während der fortgesetzten Bewegung des Sitzes eine erhöhte Bremskraft zu erhalten.

**9.** Vorrichtung nach Anspruch 7,
**dadurch gekennzeichnet,**

**dass** die plastifizierenden Elemente ein rechteckiges Element (15) aufweisen, wie beispielsweise eine Stange, Platte oder dergleichen, das zwischen dem Sitzteil (3) und dem Fahrgestellteil (4) angeordnet ist,

**dass** das rechteckige Element (15) dem Zweck dient, bei Bewegung des Sitzteiles (3) gegenüber dem Fahrgestellteil (4) Biegekräfte aufzunehmen, und

**dass** das Element (15) aus einem plastisch verformbaren Material besteht, das nach der Verformung seine ursprüngliche Form nicht wieder annimmt.

## Revendications

**1.** Dispositif pour empêcher l'apparition de blessures par coup du lapin sur une personne assise dans un siège (20) pendant un changement de mouvement rapide d'un véhicule, au niveau d'une collision provenant de l'arrière, le dispositif comportant au moins un frein (2) pour retarder le siège le long d'un élément de commande (1), qui permet un changement de déplacement commandé du siège vers l'arrière par rapport à la direction de déplacement pendant le changement de mouvement, de sorte que le siège est agencé pour rester dans une position vers l'arrière après le changement de mouvement,
**caractérisé en ce que**,
le frein (2) comporte une partie de siège (3) qui est affectée par le poids de la personne, et est prévu pour exercer une force de freinage en relation avec celui-ci contre une surface de contact (2a) agencée au niveau du châssis du véhicule,
**en ce que** le frein est muni de moyens de friction agencés pour donner une faible force de freinage pendant le mouvement initial du siège vers l'arrière, et pour appliquer une force de freinage accrue contre la surface de contact pendant le mouvement poursuivi du siège de sorte que la vitesse de déplacement du siège diminue successivement par rapport au véhicule, jusqu'à ce que le déplacement soit sensiblement arrêté.

**2.** Dispositif selon la revendication 1,
**caractérisé en ce que**,
le coefficient de frottement de la surface de contact (2a) est agencé pour augmenter dans la direction de déplacement du siège.

**3.** Dispositif selon la revendication 1, **caractérisé en ce que** ladite force de freinage est obtenue par le fait que la partie de siège (3) du frein (2) comporte un bloc de freinage (13) sur lequel agit un élément élastique (12),
**en ce que** le bloc de freinage (13) est agencé et peut se déplacer dans l'espace entre deux surfaces inclinées (14) de la partie de châssis (4), et
**en ce que** le mouvement de flexion de l'élément élastique (12) est agencé transversalement à la direction de déplacement du siège.

**4.** Dispositif pour empêcher l'apparition de blessures par coup du lapin sur une personne assise dans un siège (20) pendant un changement de mouvement rapide d'un véhicule, au niveau d'une collision provenant de l'arrière, le dispositif comportant au moins un frein (2) pour retarder le siège le long d'un élément de commande (1), qui permet un changement de déplacement commandé du siège vers l'arrière par rapport à la direction de déplacement pendant le changement de mouvement, de sorte que le siège est agencé pour rester dans une position vers l'arrière après le changement de mouvement,

**caractérisé en ce que**,

le frein (2) comporte une partie de siège (3), qui est affectée par le poids de la personne, et est prévu pour exercer une force de freinage en relation avec celui-ci contre une surface de contact (2a) agencée au niveau du châssis du véhicule,

**en ce que** le frein est muni de moyens de plastification agencés pour donner une faible force de freinage pendant le déplacement initial du siège vers l'arrière et pour appliquer une force de freinage accrue contre la surface de contact pendant le déplacement poursuivi du siège de sorte que la vitesse de déplacement du siège diminue successivement par rapport au véhicule, jusqu'à ce que le déplacement soit sensiblement arrêté.

5.  Dispositif selon la revendication 4,

**caractérisé en ce que** la partie de châssis (4) comporte au moins une ouverture, une gorge (6), ou analogue, rectangulaire, dans laquelle une partie de siège (3) peut être insérée,

**en ce que** la gorge (6) et la partie de siège (3) coopérant avec celle-ci sont prévues ou conçues pour avoir des surfaces de frottement, et

**en ce que** l'ouverture, la gorge (6) ou analogue, se rétrécit le long d'au moins une partie de son étendue dans la direction vers une extrémité depuis ses extrémités divergentes arrière de sorte qu'un effet de freinage croissant est obtenu entre les parties (3, 4) pendant un changement de mouvement relatif.

6.  Dispositif selon la revendication 4, **caractérisé en ce que**

la partie de siège (3) a une section transversale en forme de coin, dont les surfaces convergentes (8) sont agencées pour coopérer avec les surfaces latérales (9) de la gorge (10) ou analogue d'une partie de châssis (4),

**en ce que** la gorge (10) ou analogue est conçue selon une forme essentiellement complémentaire à la forme du coin, et

**en ce que** la partie de siège en forme de coin (3) peut être déplacée verticalement dans la gorge à l'encontre de l'action d'au moins un ressort (11).

7.  Dispositif selon la revendication 4,

**caractérisé en ce que**,

les surfaces de contact (2a) du frein (2) incluent ou sont constituées de moyens de plastification, qui sont conçus pour fournir une déformation permanente.

8.  Dispositif selon la revendication 4,

**caractérisé en ce que**,

les moyens de plastification sont constitués d'un matériau déformable plastiquement et sont conçus de sorte que la quantité dedit matériau augmente dans la direction de déplacement du siège, de manière à obtenir une force de freinage accrue pendant le déplacement poursuivi du siège.

9.  Dispositif selon la revendication 7,

**caractérisé en ce que**,

les moyens de plastification comportent un élément rectangulaire (15), par exemple une tige, une plaque ou analogue, qui est agencé entre la partie de siège (3) et la partie de châssis (4),

**en ce que** l'élément rectangulaire (15) est prévu pour recevoir des forces d'incurvation au niveau d'un déplacement de la partie de siège (3) par rapport à la partie de châssis (4),

**en ce que** l'élément (15) est un matériau déformable plastiquement, qui ne reprend pas sa forme antérieure après la déformation.

FIG.1

FIG.2

FIG.3

FIG.4

FIG.5

FIG.6